# EUROPÄISCHE PATENTANMELDUNG

(11) **EP 3 587 316 A1**
(43) Veröffentlichungstag der Anmeldung: **01.01.2020**
(21) Anmeldenummer: 19180431.9
(22) Anmeldetag: 17.06.2019
(51) Int. Cl.: B65H 35/00, B65H 35/10, B65H 37/00

(54) **STANZTEILAPPLIKATOR UND VERFAHREN ZUM AUFBRINGEN VON STANZTEILEN AUF OBERFLÄCHEN SOWIE EIN STANZTEILBAND**

(30) Priorität: 29.06.2018 DE 102018210746
(71) Anmelder: tesa SE, 22848 Norderstedt (DE)
(72) Erfinder: BRANDT, Hans-Peter, 22869 Schenefeld (DE); SEIBERT, Matthias, 22453 Hamburg (DE)

(57) **Zusammenfassung**

Die Erfindung betrifft einen Applikator für Stanzteile (2) mit einem Stanzteilband (1) mit einer Längsrichtung (L) und mit einer Trägerschicht (3) und einer Klebmasseschicht (4), wobei eine Außenkontur der Stanzteile (2) durch die Träger- und Klebmasseschicht (3, 4) bis auf Sollbruchstellen (18) durchgestanzt ist und ein Stanzteilkomplement (19) die Stanzteile (2) durchgehend seitlich zu einer Längsrichtung (L) überragt, und einem Stempelkopf (8), über den das Stanzteilband (1) läuft, wobei die über den Stempelkopf (8) laufenden Stanzteile (2) mit ihrer Klebmasseschicht (4) dem Stempelkopf (8) abgewandt sind und die Stanzteile (2) mittels des Stempelkopfes (8) auf eine Oberfläche (11) drückbar sind.

## Beschreibung

Die Erfindung betrifft einen Applikator für Stanzteile mit einem Stanzteilband mit einer Träger- und einer Klebmasseschicht. Die Erfindung betrifft auch ein Verfahren zum Aufbringen von Stanzteilen auf eine Oberfläche. Die Erfindung betrifft auch ein Stanzteilband mit einer Trägerschicht und einer Klebmasseschicht.

Bei der Herstellung von Kraftfahrzeugen entsteht häufig das Problem, dass in Karosserieteilen eingebrachte Öffnungen nach Bearbeitungsvorgängen wieder verklebt werden müssen. Beispielsweise können Karosserieteile mit Flüssigkeit oberflächenbehandelt werden. Die zur Oberflächenbehandlung erforderliche Flüssigkeit läuft über in die Karosserieteile vorher eingebrachte Öffnungen von selbst ab. Nachträglich werden die Öffnungen wieder verschlossen. Das Verschließen der Öffnungen erfolgt häufig per Hand, indem Stanzteile von einem Stanzteilband oder einem Stanzteilblatt abgenommen und per Hand auf die Öffnungen aufgeklebt werden. Die Stanzteile weisen eine Trägerschicht auf und eine auf der einen Seite der Trägerschicht aufgebrachte Klebmasseschicht. Die Klebmasseschicht ist in der Regel vollflächig auf die Trägerschicht aufgebracht.

Im Stand der Technik sind darüber hinaus Roboterarme bekannt.

Dazu wird eine Stanzteilrolle, auf der ein Stanzteilband in herkömmlicher Weise aufgewickelt ist, zur Verfügung gestellt. Bei dem Stanzteilband handelt es sich in der Regel um einen Liner, der bandförmig vorliegt. Auf diesen Liner sind der Reihe nach voneinander beabstandet Stanzteile mit Trägerschicht und Klebmasseschicht derart aufgebracht, dass die freie Seite der Klebmasseschicht auf dem Liner aufgeklebt ist, so dass die dem Liner gegenüberliegende Seite der Klebmasseschicht von der Trägerschicht abgedeckt ist, so dass die Klebmasse vollständig geschützt ist. Das Stanzteilband kann dann aufgewickelt werden, und zwar so, dass der Liner wicklungsaußenseitig und die Stanzteile wicklungsinnenseitig auf einer Stanzteilrolle angeordnet sind. Bekannterweise wird das freie Ende des Stanzteilbandes abgezogen und in einer Vorrichtung eingespannt, und ein Roboterarm saugt die Stanzteile nacheinander vom Stanzteilband ab. Dazu ist der Roboterarm rüsselartig ausgebildet und saugt das Stanzteil an der Trägerschicht an, löst es von dem Liner ab und drückt das Stanzteil auf die Öffnung in der vorgegebenen Position.

Nachteiligerweise ist dieses Verfahren relativ zeitaufwendig, da der Roboterarm nach jedem Klebevorgang wieder zur Stanzteilrolle zurückbewegt werden muss, um das nächste Stanzteil vom Stanzteilband abzulösen.

Darüber hinaus sind Applikatoren in Form von Etikettenspendern bekannt. Dabei ist der Etikettenspender an einem Roboterarm angeordnet. Der Etikettenspender weist die Stanzteilrolle auf. Die Stanzteilrolle wird zu einer Andruckwalze geführt und der Liner automatisch abgezogen und das Stanzteil durch Verfahren des Etikettenspenders mithilfe der Andruckwalze auf das Loch aufgedrückt. Nachteiligerweise ist dieses Verfahren ziemlich platzaufwendig, da der Etikettenspender mithilfe des Roboterarms über eine gewisse Strecke gezogen werden muss. Das z. B. ist nachteilig in schlecht zugänglichen Bereichen eines Autoblechs, beispielsweise, wenn die zu verschließende Öffnung direkt neben einer hochgebogenen Kante platziert ist.

Es ist daher in einem ersten Aspekt Aufgabe der vorliegenden Erfindung, einen Applikator zur Verfügung zu stellen, der die oben genannten Nachteile verringert.

Es ist in einem zweiten Aspekt Aufgabe der Erfindung, ein Verfahren zur Verfügung zu stellen, mit dem Stanzteile aufgeklebt werden können und die oben genannten Nachteile vermieden werden.

Es ist in einem dritten Aspekt auch Aufgabe der Erfindung, ein Stanzteilband zur Verfügung zu stellen, mit dem das oben genannte Verfahren durchführbar ist.

Hinsichtlich des Applikators wird die Aufgabe durch einen eingangs genannten Applikator mit den Merkmalen des Anspruchs 1 gelöst.

Der erfindungsgemäße Applikator für Stanzteile umfasst ein Stanzteilband mit einer Längsrichtung und vorzugsweise entlang der Längsrichtung voneinander beabstandet aufgebrachten Stanzteilen. Das Stanzteilband weist eine Träger- und eine Klebmasseschicht auf, wobei eine Außenkontur der Stanzteile durch die Träger- und die Klebmasseschicht bis auf Sollbruchstellen durchgestanzt ist. Vorzugsweise befinden sich die Sollbruchstellen in der Trägerschicht, besonders bevorzugt nur in der Trägerschicht.

Erfindungsgemäß überragt ein Stanzteilkomplement die Stanzteile durchgehend seitlich also senkrecht zur Längsrichtung. Das Stanzteilkomplement bildet nach dem Herauslösen der Stanzteile ein Lochband aus, das an den seitlich überragenden Abschnitten zusammengehalten wird. Die Abschnitte sind breit genug gewählt, so dass sie hinreichend reißfest sind, um durch Ziehen an einem Ende des Lochbandes ein Abwickeln des Stanzteilbandes von einer Stanzteilbandrolle zu ermöglichen.

Der erfindungsgemäße Applikator umfasst einen Stempel mit einem Stempelkopf, über den das Stanzteilband läuft, wobei das über den Stempelkopf laufende Stanzteilband mit seiner Klebmasseschicht dem Stempelkopf abgewandt angeordnet ist. Die erfindungsgemäßen Stanzteile sind daher gegenüber dem Stand der Technik gleichsam um die Längsrichtung um 180° gedreht angeordnet. Dadurch ist es möglich, dass die Stanzteile mittels eines Stempels auf eine Oberfläche aufdrückbar sind und durch Aufreißen der Sollbruchstellen herauslösbar sind. Durch Weiterbefördern des Stanzteilbandes bzw. Lochbandes wird das nächste Stanzteil in die Position des Stempels gebracht.

Vorzugsweise ist eine Steuerung vorgesehen. Die Steuerung umfasst einen ersten Sensor, der mit einem Abtastbereich auf den Stempelkopf gerichtet ist und das Vorhandensein eines Stanzteils am Stempelkopf registriert. Dieses kann z.B. durch eine farbliche Steuermarkierung erfolgen, es sind aber auch andere Erfassungsmöglichkeiten denkbar. Die Steuerung ist mit dem Sensor signalleitend verbunden, und Messwerte des Sensors werden der Steuerung zugeführt. Der Applikator ist gemäß einer besonders bevorzugten Variante an einem frei beweglichen Roboterarm befestigt. Der Roboterarm steuert zum einen eine Hin-und-her-Bewegung des Applikators in der z-Richtung senkrecht zur Oberfläche und zum anderen eine Bewegung in einer xy-Ebene parallel zur Oberfläche. Der Roboterarm ist in der Lage, entsprechend auf die Steuerungssignale zu reagieren.

Des Weiteren wird der getaktete Vortrieb des Stanzteilbandes gesteuert, mit dem das nachfolgende Stanzteil auf dem Stempelkopf positioniert werden kann. Der Vortrieb des Stanzteilbandes kann als angetriebene erste Aufwickelrolle für das Lochband ausgebildet sein.

Wenn der erste Sensor das Vorhandensein eines Stanzteils am Stempelkopf signalisiert und einen entsprechenden Messwert an die Steuerung leitet, wird der Vortrieb des Stanzteilbandes gestoppt und dem Roboter ein Signal zugeführt, und der Roboter bewegt den Applikator samt Stempelkopf in einer Hin-Bewegung auf die Oberfläche zu und in einer Her-Bewegung von der Oberfläche zurück. Die Hin-Bewegung erfolgt dabei so weit, bis das Stanzteil auf der Oberfläche aufklebt. Dafür kann ein entsprechender Drucksensor am Stempel angeordnet sein, der den Druckwiderstand durch die Oberfläche registriert. Der Stempelkopf und das Stanzteil sind dabei in ihrer Außenkontur vorzugsweise identisch, so dass tatsächlich nur oder vorwiegend das Stanzteil und nicht das Stanzteilkomplement auf die Oberfläche gedrückt wird und dort eine Haftklebverbindung herstellt.

Durch die Her-Bewegung des Stempelkopfes und/oder eine Weiterbeförderung des Stanzteilbandes brechen die Sollbruchstellen auf, und das Stanzteil löst sich aus dem Stanzteilband und hinterlässt als Stanzteilkomplement das Lochband.

Damit der Applikator von der ersten Position zur nächsten Position verbracht wird, ist der Steuerung vorzugsweise ein Öffnungsmuster oder Klebemuster in der Robotersteuerung einprogrammiert. Die Steuerung kann dazu als NC-Steuerung ausgebildet sein. Es ist auch denkbar, dass ein zweiter Sensor vorgesehen ist, der die Löcher beim Überfahren der Oberfläche registriert. Es kann auch eine Kombination aus NC-Steuerung und Sensorik vorgesehen sein.

Günstigerweise steuert die Steuerung den Roboter an, der den Applikator samt Stempelkopf in eine erste Position über der Oberfläche bewegt und das Stanzteil an einer ersten Oberflächenposition aufklebt. Sie steuert nach dem Aufkleben des Stanzteils den Roboter wiederum an und bewegt den Applikator samt Stempelkopf in der xy-Ebene in eine zweite Position über der Oberfläche; dort wird das nächste Stanzteil durch eine Hin-Bewegung in z-Richtung auf die nächste Öffnung aufgeklebt.

Günstigerweise ist eine Stanzteilrolle auf einer Zuführseite des Stempelkopfes und eine erste Aufwickelrolle auf einer Abführseite des Stempelkopfes vorgesehen. Die erste Aufwickelrolle ist mit der Steuerung signalleitend verbunden, und auf ihr ist das Lochband aufwickelbar. Die Steuerung dreht die erste Aufwickelrolle getaktet. Dabei entspricht der Vorschub eines Taktes jeweils dem Abstand benachbarter Stanzteile in dem Stanzteilband.

In einer weiteren bevorzugten Ausführungsform der Erfindung ist eine zweite Aufwickelrolle an der Zuführseite zum Aufwickeln eines Liners vorgesehen. Die freie Klebseite des Stanzteilbandes kann optional mit einem Liner abgedeckt sein. Der Liner ist dann auf der zweiten Aufwickelrolle auf der Zuführseite, bevor das Stanzteil dem Stempelkopf zugeführt wird, abzuziehen.

Die Aufgabe wird auch durch ein oben genanntes Verfahren mit den Merkmalen des Anspruchs 6 gelöst.

Das Verfahren eignet sich zur Durchführung mit einem der oben genannten Applikatoren; umgekehrt eignen sich die Applikatoren auch zur Durchführung einer der folgenden Verfahren. Erfindungsgemäß läuft ein Stanzteilband mit einer Längsrichtung und mit einer Trägerschicht und einer Klebmasseschicht über einen Stempelkopf eines Stempels, wobei eine Außenkontur der Stanzteile durch die Träger- und Klebmasseschicht bis auf Sollbruchstellen durchgestanzt ist und ein Stanzteilkomplement die Stanzteile durchgehend seitlich zur Längsrichtung überragt.

Erfindungsgemäß wird das Stanzteilband gestoppt, wenn ein Stanzteil über dem Stempelkopf positioniert ist, und der Stempel wird dann in einer Hin-Bewegung mittels eines Roboterarms auf der Oberfläche bewegt und das Stanzteil auf die Oberfläche geklebt. Während der Hin-Bewegung wird das Stanzteilband etwas nachgeführt, damit das Stanzteil nicht vom Stempelkopf rutscht. Eine Andruckfläche oder zumindest Außenkontur des Stempelkopfes ist dem Stanzteil identisch.

Ebenso wird das Stanzteilband während der Her-Bewegung ebenfalls durch Nachführen des Stanzteilbandes gespannt gehalten. Durch die Her-Bewegung werden die Sollbruchstellen aufgebrochen. Es ist auch denkbar, dass das Stanzteilband zunächst oder gleichzeitig etwas vorbefördert wird und dadurch die Sollbruchstellen aufbrechen. Eine Klebkraft der Klebmasseschicht auf der Oberfläche und eine Reißfestigkeit der Sollbruchstellen sind entsprechend aufeinander abgestimmt.

Das erfindungsgemäße Verfahren ermöglicht es in einfacher Weise, Stanzteile auf einer Oberfläche, insbesondere auf Öffnungen, zu positionieren, wobei das Stanzteil natürlich im Durchmesser etwas größer als die Öffnung gewählt wird, damit ein Kleberand entsteht. Natürlich können die Stanzteile aber auch auf andere Positionen als auf Öffnungen geklebt werden.

Aufgrund der Hin-und-her-Bewegung des Stempelkopfes in der z-Richtung wird nur sehr wenig Platz in der xy-Ebene benötigt, um ein Stanzteil auf einer Oberfläche aufzubringen. Dies ist ein Vorteil gegenüber den bekannten Etikettenspendern.

Darüber hinaus ist es vorzugsweise möglich, dass eine erste Position auf der Oberfläche bestimmt wird, das Stanzteil auf die erste Position geklebt wird und dass eine zweite Position bestimmt wird und der Stempel bereits während der Weitertaktung des Stanzteilbandes zur zweiten Position bewegt wird. Vorzugsweise ist das nächste Stanzteil bereits wieder auf dem Stanzteilkopf angeordnet, wenn der Stempel seine vorgesehene zweite Position erreicht hat. Dieses ist gegenüber dem bekannten Roboterarm eine erhebliche Zeitersparnis. Vorzugsweise kann ein erster Sensor auf den Stempelkopf gerichtet werden und das Vorhandensein des Stanzteils erkennen. Beim Erkennen des Stanzteils wird das Stanzteilband gestoppt, und wenn der Stempel seine Position über der Oberfläche erreicht hat, wird der Stempel zur Oberfläche bewegt, das Stanzteil aufgeklebt und das Stanzteilband um ein Stanzteil weitergetaktet. Der Roboterarm ist zum Verfahren des Applikators in der xy-Ebene parallel zur Oberfläche ausgebildet, während die Hin-und-her-Bewegung des Stempels in z-Richtung erfolgt.

Die Steuerung steuert auch die Geschwindigkeit und den Drehwinkel einer Aufwickelrolle, auf der das Lochband aufgewickelt wird, sowie gegebenenfalls die Geschwindigkeit und den Drehwinkel einer zweiten Aufwickelrolle, auf der ein optionaler Liner aufgewickelt werden kann.

Die Erfindung wird in ihrem dritten Aspekt durch ein Stanzteilband mit den Merkmalen des Anspruchs 10 gelöst.

Das erfindungsgemäße Stanzteilband weist eine Längsrichtung auf und eine Trägerschicht und eine Klebmasseschicht, wobei eine Außenkontur der Stanzteile durch die Träger- und Klebmasseschicht bis auf Sollbruchstellen durchgestanzt ist und ein Stanzteilkomplement die Stanzteile durchgehend seitlich zur Längsrichtung überragt. Das Stanzteilkomplement ist ein durchgehendes Lochband. Vorzugsweise ist die Klebmasseschicht entlang der Außenkontur des Stanzteils vollständig durchgestanzt, und die Soll-Bruchstellen sind nur in der Trägerschicht vorhanden. Das Stanzteilband ist dann durch Ziehen an der Trägerschicht abrollbar und beförderbar.

Die Stanzteile sind gegenüber den bekannten Stanzteilbändern gleichsam um 180° um die Längsrichtung gedreht angeordnet. Die Klebmasseschicht liegt frei und kann durch Druck auf das Stanzteil auf eine Oberfläche aufgeklebt und das Stanzteilkomplement dann von dem Stanzteil abgelöst werden, indem die Sollbruchstellen aufbrechen. Dafür ist die Trennkraft zwischen der Klebmasseschicht und der zu beklebenden Oberfläche vorzugsweise größer gewählt als die Reißfestigkeit der das Stanzteil haltenden Sollbruchstellen.

In einer weiteren Ausführungsform des erfindungsgemäßen Stanzteilbandes ist ein Liner vorgesehen, der entlang der Klebmasseschicht angeordnet ist und die freien Seiten der Klebmasseschichten der Stanzteile abdeckt. Das Stanzteilband kann mit der Trägerschicht der Klebmasseschicht und dem Liner zur Stanzteilrolle aufgewickelt werden. In beiden Ausführungsformen des Stanzteilbandes ist das aufgewickelte Stanzteilband mit der Trägerschicht wicklungsinnenseitig und mit der Klebmasseschicht wicklungsaußenseitig aufgewickelt.

Die Erfindung wird anhand von zwei Ausführungsbeispielen in vier Figuren beschrieben. Dabei zeigen:
- Fig. 1: eine prinzipielle Seitenansicht eines erfindungsgemäßen Stanzteilbandes,
- Fig. 2: eine prinzipielle Draufsicht des Stanzteilbandes in Fig. 1,
- Fig. 3: eine prinzipielle Seitenansicht eines erfindungsgemäßen Applikators für das Stanzteilband in einer ersten Ausführungsform,
- Fig. 4: eine prinzipielle Draufsicht des Stanzteilbandes nach Herausreißen von Stanzteilen,
- Fig. 5: eine prinzipielle Seitenansicht eines erfindungsgemäßen Applikators für das Stanzteilband in einer zweiten Ausführungsform

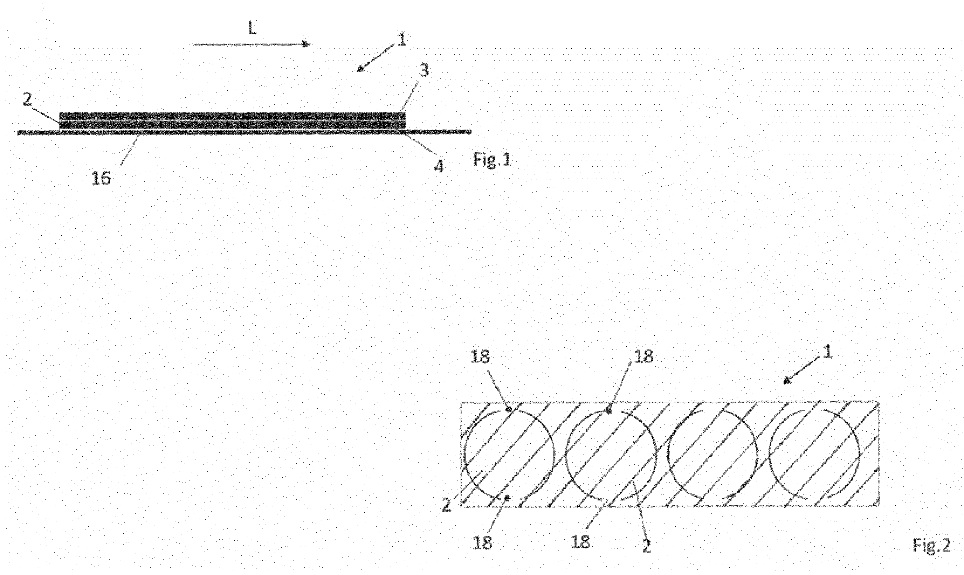

Ein in der Fig. 1 dargestelltes Stanzteilband 1 weist in einer Reihe angeordnete Stanzteile 2 auf, die voneinander beabstandet sind. Der Abstand der Stanzteile 2 voneinander richtet sich nach der jeweiligen Applikation; er kann 1 mm, 2 mm, 3 mm bis 6 mm oder 7 mm betragen. Es sind auch alle Zwischenwerte mitoffenbart. Die Stanzteile 2 sind entlang einer Längsrichtung L in dem Stanzteilband angeordnet.

Das Stanzteilband 1 umfasst eine Trägerschicht 3 und eine Klebmasseschicht 4. Die Trägerschicht 3 besteht aus gängigen Kunststoffen, beispielhaft, aber nicht einschränkend erwähnt seien:
Polyethylen, Polypropylen - insbesondere das durch mono- oder biaxiale Streckung erzeugte orientierte Polypropylen (OPP), cyclische Olefin Copolymere (COC), Polyvinylchlorid (PVC), Polyester - insbesondere Polyethylenterephthalat (PET) und Poylethylennaphthalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Die Klebmasseschicht 4 besteht aus einer üblichen Haftklebmasse. Die Haftklebmasse umfasst eine Basis und eine vernetzbare Komponente, auch als Reaktivharz bezeichnet.

Als Basis für Haftklebmassen kommen verschiedene Materialien, insbesondere unpolare Elastomere in Frage.

Unpolare Elastomere, wie beispielsweise Vinylaromaten-Blockcopolymere, zeichnen sich dadurch aus, dass sie in unpolaren Lösungsmitteln gelöst werden können, d. h. in Lösungsmitteln und/oder Lösungsmittelgemischen, deren Polarität Ethylacetat entspricht oder die unpolarer sind. Dies sind insbesondere Lösungsmittel und/oder Lösungsmittelgemische mit einer Dielektrizitätskonstante von kleiner 6.1 [http://en.wikipedia.org/wiki/Solvent] und/oder mit Hansenparametern δP Polar ≤ 5.3; δH Hydrogen bonding ≤ 7.2 [Abbott, Steven and Hansen, Charles M. (2008) Hansen Solubility Parameters in Practice, ISBN 0-9551220-2-3 oder Hansen, Charles M. (2007) Hansen solubility parameters: a user's handbook CRC Press, ISBN 0-8493-7248-8].

Kommen als Elastomere Blockcopolymere zum Einsatz, dann enthalten diese zumindest eine Blocksorte mit einer Erweichungstemperatur von größer 40 °C wie zum Beispiel Vinylaromate (auch teil- oder vollhydrierte Varianten), Methylmethacrylat, Cyclohexylmethacrylat, Isobornylmethacrylat und Isobornylacrylat.

Weiter vorzugsweise enthält das Blockcopolymer eine Blocksorte mit einer Erweichungstemperatur von kleiner - 20 °C.

Beispiele für Polymerblöcke mit niedrigen Erweichungstemperaturen ("Weichblöcke") sind Polyether wie zum Beispiel Polyethylenglykol, Polypropylenglykol oder Polytetrahydrofuran, Polydiene wie zum Beispiel Polybutadien oder Polyisopren, (teil)hydrierte Polydiene wie zum Beispiel Polyethylenbutylen, Polyethylenpropylen oder Polybutylenbutadien, Polybutylen, Polyisobutylen, Polyalkylvinylether, Polymerblöcke α,β-ungesättigter Ester wie insbesondere Acrylat-Copolymere.

Der Weichblock ist dabei in einer Auslegung unpolar aufgebaut und enthält dann bevorzugt Butylen oder Isobutylen oder hydrierte Polydiene als Homopolymerblock oder Copolymerblock, letztere vorzugsweise mit sich selbst oder miteinander oder mit weiteren, besonders bevorzugt unpolaren Comonomeren copolymerisiert. Als unpolare Comonomere sind beispielsweise (teil-)hydriertes Polybutadien, (teil-)hydriertes Polyisopren und/oder Polyolefine geeignet.

Die vernetzbare Komponente, auch als Reaktivharz bezeichnet, besteht aus einem cyclischen Ether und eignet sich für die strahlenchemische und gegebenenfalls thermische Vernetzung mit einer Erweichungstemperatur von kleiner 40 °C, bevorzugt von kleiner 20 °C.

Bei den Reaktivharzen auf Basis cyclischer Ether handelt es sich insbesondere um Epoxide, also Verbindungen, die zumindest eine Oxiran-Gruppe tragen, oder Oxetane. Sie können aromatischer oder insbesondere aliphatischer oder cycloaliphatischer Natur sein.

Einsetzbare Reaktivharze können monofunktionell, difunktionell, trifunktionell, tetrafunktionell oder höher funktionell bis zu polyfunktionell gestaltet sein, wobei sich die Funktionalität auf die cyclische Ethergruppe bezieht.

Beispiele, ohne sich einschränken zu wollen, sind 3,4-Epoxycyclohexylmethyl-3',4'-epoxycyclohexancarboxylat (EEC) und Derivate, Dicyclopentadiendioxid und Derivate, 3-Ethyl-3-oxetanmethanol und Derivate, Tetrahydrophthalsäurediglycidylester und Derivate, Hexahydrophthalsäurediglycidylester und Derivate, 1,2-Ethandiglycidylether und Derivate, 1,3-Propandiglycidylether und Derivate, 1,4-Butandioldiglycidylether und Derivate, höhere 1,n-Alkandiglycidylether und Derivate, Bis-[(3,4-epoxycyclohexyl)methyl]-adipat und Derivate, Vinylcyclohexyldioxid und Derivate, 1,4-Cyclohexandimethanol-bis-(3,4-epoxycyclohexancarboxylat) und Derivate, 4,5-Epoxytetrahydrophthalsäurediglycidylester und Derivate, Bis-[1-ethyl(3-oxetanyl)methyl]ether und Derivate, Pentaerythritoltetraglycidylether und Derivate, Bisphenol-A-Digylcidylether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxyphenol-Novolaks, Epoxycresol-Novolaks, hydrierte Epoxycresol-Novolaks, 2-(7-Oxabicyclo)Spiro[1,3-dioxane-5,3'-[7]oxabicyclo[4.1.0]-heptane], 1,4-Bis((2,3-epoxypropoxy)methyl)cyclohexane.

Reaktivharze können in ihrer monomeren oder auch dimeren, trimeren, usw. bis hin zu ihrer oligomeren Form eingesetzt werden.

Gemische von Reaktivharzen untereinander, aber auch mit anderen coreaktiven Verbindungen wie Alkoholen (monofunktionell oder mehrfach funktionell) oder Vinylethern (monofunktionell oder mehrfach funktionell), sind ebenfalls möglich.

Die Klebmasseschicht 4 ist vollflächig auf die eine Seite der Trägerschicht 3 aufgebracht. Die Klebmasseschicht 4 ist vollflächig mit einem Liner 16 abgedeckt. Der Liner 16 klebt die freie Klebseite der Klebmasseschicht 4 ab, so dass diese vor Verunreinigungen u. Ä. geschützt ist. Darüber hinaus werden ein Aufwickeln des Stanzteilbandes 1 zu einer Stanzteilrolle 7 und ein nachträgliches Abwickeln erleichtert.

Die Stanzteile 2 sind gemäß Fig. 2 in ihrer Außenkontur bis auf Sollbruchstellen 18 durch die Trägerschicht 3 und die Klebmasseschicht 4 durchgestanzt. Die Sollbruchstellen 18 können sowohl in der Trägerschicht 3 als auch in der Klebmasseschicht 4 vorhanden sein. Die Sollbuchstellen 18 können senkrecht zur Längsrichtung L seitlich an den Stanzteilen wie in Fig. 2 angeordnet sein oder auch in Längsrichtung L vorn und hinten an den Stanzteilen 2 oder beides oder auch in anderer Weise.

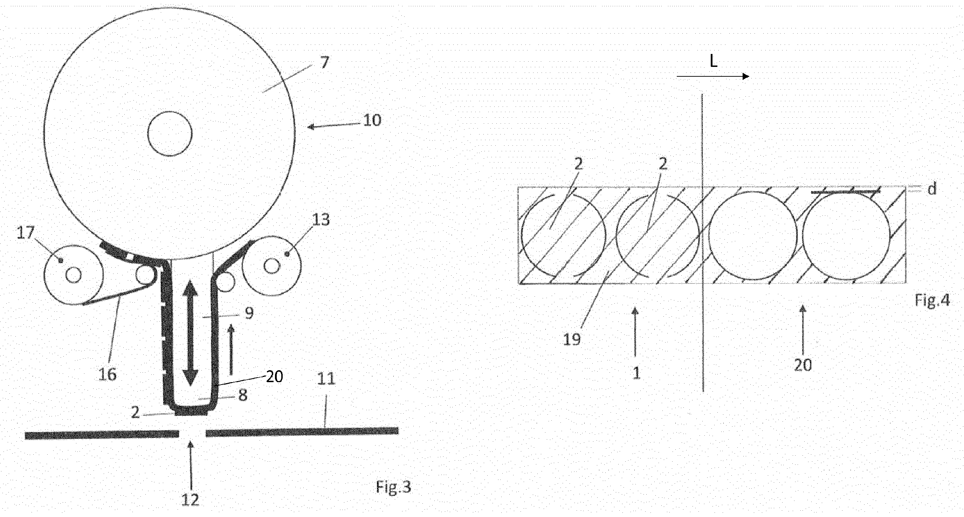

Das Stanzteilband 1 gemäß Fig. 1 ist zunächst auf der Stanzteilrolle 7 gemäß Fig. 3 aufgewickelt. Ein Ende des Stanzteilbandes 1 wird von der Stanzteilrolle 7 gelöst und gemäß Fig. 3 um einen Stempelkopf 8 eines Stempels 9 herumgelegt. Die Stanzteilrolle 7 ist auf einen nicht näher dargestellten Stift aufgesteckt und auf ihm drehbar gelagert. Fig. 3 zeigt lediglich den prinzipiellen Aufbau eines erfindungsgemäßen Applikators 10 in einer ersten Ausführungsform. Der Applikator 10 in der ersten Ausführungsform ist für Stanzteilbänder 1 mit einem Liner 16 geeignet.

Der Applikator 10 weist eine zweite Aufwickelrolle 17 auf, die auf einer Zuführseite des Stempelkopfes 8 angeordnet ist, während eine erste Aufwickelrolle 13 auf der Abführseite des Stempelkopfes 8 angeordnet ist. Die zweite Aufwickelrolle 17 rollt zunächst den Liner 16 auf der Zuführseite des Stempelkopfes 8 auf, so dass die Klebmasseschicht 4 der Stanzteile 2 freiliegt und dann gemäß Fig. 3 das vom Liner 16 befreite Stanzteilband 1 um den Stempelkopf 8 herumgeführt werden kann.

Zur Führung des Stanzteilbandes 1 sind zusätzlich noch Umlenkrollen u. Ä. vorgesehen, die in der Fig. 2 nicht eingezeichnet sind. Das Stanzteilband 1 wird, ausgehend von der Stanzteilrolle 7, um den Stempel 9 und insbesondere um den Stempelkopf 8 herumgeführt. Der Applikator 10 ist in der Applikation durch den angeflanschten Roboterarm eines Roboters hin und her beweglich. Die Oberfläche ist in Fig. 2 mit einer Öffnung 12 dargestellt. Der erfindungsgemäße Applikator 10 ist dazu vorgesehen, eines der Stanzteile 2 auf die Öffnung 12 zu kleben und die Öffnung 12 damit zu verschließen.

Die Öffnungen 12 weisen üblicherweise einen kreisförmigen oder ovalen Öffnungsquerschnitt mit einem Durchmesser von etwa 20 mm auf. Die Stanzteile 2 haben daher einen kreisförmigen Durchmesser von etwa 30 mm, so dass ein 5 mm breiter Kleberand, die Öffnung 12 umlaufend, ausgebildet wird. Der Vorschub des Stanzteilbandes 1 wird durch die angetriebene erste Aufwickelrolle 13 zur Verfügung gestellt.

Die erste Aufwickelrolle 13 wickelt nur einen Haltegurt 6, nachdem die Stanzteile 2 der Reihe nach aufgeklebt wurden, auf, also ohne die Stanzteile 2.

Es ist eine Steuerung vorgesehen, die die erste Aufwickelrolle 13 getaktet in einem Winkel dreht, der dem Abstand der Stanzteile 2 voneinander entspricht, so dass für jeden Klebvorgang genau eines der Stanzteile 2 auf dem Stempelkopf 8 positioniert ist. In einer Klebstellung, die in Fig. 2 dargestellt ist, ist das Stanzteil 2 auf dem Stempelkopf 8 angeordnet. Er kann in diesem Zustand durch Hin-Bewegung des Applikators 10 auf die Öffnung 12 geklebt werden.

Eine Steuerung des Applikators 10 funktioniert dabei wie folgt: Es ist ein erster Sensor vorgesehen, der auf den Stempelkopf 8 gerichtet ist und der das Vorhandensein des Stanzteils 2 auf dem Stempelkopf 8 registriert. Dieses kann z.B. durch eine farbliche Steuermarkierung erfolgen, es sind aber auch andere Erfassungsmöglichkeiten denkbar. Bei Vorhandensein des Stanzteils 2 gibt der erste Sensor ein Signal an die Steuerung ab, die ein Stoppsignal an einen Antrieb der ersten Aufwickelrolle 13 abgibt. Die Drehbewegung der ersten Aufwickelrolle 13 wird gestoppt. Der Applikator 10 wird durch einen angeflanschten Roboterarm und damit das Stanzteil 2 auf die Öffnung 12 gedrückt. Daraufhin wird der Applikator 10 wieder hochgefahren und durch die Steuerung koordiniert, die erste Aufwickelrolle 13 etwas gedreht, so dass das Stanzteilband 1 nicht lose über dem eingefahrenen Stempelkopf 8 hängt. Dadurch reißt das Stanzteil 2 an den Sollbruchstellen 18 von einem Stanzteilkomplement 19 ab.

Die erste Aufwickelrolle 13 wird dann weitergedreht, so dass das nächste Stanzteil 2 auf dem eingezogenen Stempelkopf 8 positioniert ist. Während des Weitertransportes des Stanzteilbandes 1 wird durch den Antrieb der gesamte Applikator 10 von einer Position über der in Fig. 2 dargestellten Öffnung 12 in eine nächste Position verfahren, in der der Stempelkopf 8 über der nächsten Öffnung 12 positioniert ist. Es kann entweder ein zweiter Sensor vorgesehen sein, der die nächste Öffnung 12 registriert und ein Signal an die Steuerung abgibt, die den Antrieb stoppt, so dass der Applikator 10 in der nächsten Position über der Oberfläche 11 stehenbleibt, oder es ist vorgesehen, dass in der Steuerung des Roboterarms das Öffnungsmuster der Oberfläche 11 abgelegt ist, so dass der Applikator 10 nacheinander die Öffnungen 12 anfährt.

Der Stempelkopf 8 weist eine Andrückfläche auf, die mit der Außenkontur des Stanzteils 2 identisch ist, so dass nur das Stanzteil 2 auf die Oberfläche 11 geklebt wird. Durch die Her-Bewegung des Stempelkopfes 8 reißen die Sollbruchstellen 18 auf, weil die Klebkraft des Stanzteils 2 auf der Oberfläche 11 größer ist als die Reißfestigkeit der Sollbruchstellen 18 des Stanzteils 2. Nach dem Herausreißen des Stanzteils 2 verbleibt als Stanzteilkomplement 19 ein Lochband 20, das auf der ersten Auswickelrolle 13 aufgewickelt wird. Die Trägerschicht 3 überragt das Stanzteil 2 seitlich, senkrecht zur Längsrichtung L um eine Breite d, die so bemessen ist, dass durch Zugkraft am Ende des Lochbandes 20 das Stanzteilband 1 von der Stanzteilrolle 7 abgezogen werden kann, ohne zu reißen.

Der Liner 16 wird auf der zweiten Aufwickelrolle 17 aufgewickelt und das Lochband 20 wird auf der ersten Aufwickelrolle 13 aufgewickelt, und der Liner 16 und das Lochband 20 können einem Recycling zugeführt werden.

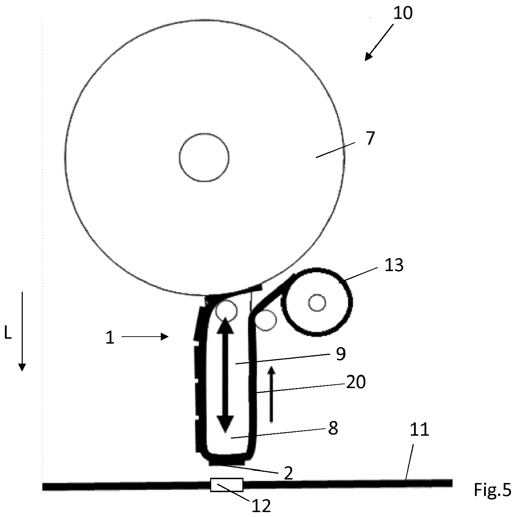

Fig. 5 zeigt eine prinzipielle seitliche Ansicht eines erfindungsgemäßen Applikators 10 in einer zweiten Ausführungsform. Die zweite Ausführungsform des Applikators 10 ist dazu bestimmt, Stanzteile 2 von einem Stanzteilband 1 zu applizieren, das keinen Liner 16 aufweist. Der Applikator 10 weist die Stanzteilrolle 7 auf, die sich jedoch gegenüber der Stanzteilrolle 7 der ersten Ausführungsform in Fig. 3 anders herum, in Fig. 5 im Uhrzeigersinn, abwickelt. Auf der Stanzteilrolle 7 ist das Stanzteilband 1 aufgewickelt, dass Stanzteilband 1 weist eine Trägerschicht 3 auf, sowie voneinander beabstandet in Längsrichtung L entlang der Trägerschicht 3 angeordnete Stanzteile 2. Die Stanzteile 2 weisen an ihrer der Trägerschicht 3 abgewandten Seite eine Klebmassenschicht 4 auf. Die Klebmasseschicht 4 ist jedoch nicht von einem Liner 16 abgedeckt, sondern sie liegt frei und das Stanzteilband wird mit der freiliegenden Klebmasseschicht zur Stanzteilrolle 7 aufgewickelt. Dabei ist die Klebkraft der Klebmasseschicht 4 so bemessen, dass ein problemloses Abwickeln des Stanzteilbandes 1 von der Stanzteilrolle 7 durch ein Ziehen am freien Ende des Stanzteilbandes 1 möglich ist. Das freie Ende des Stanzteilbandes 1 ist um den Stempelkopf 8 wie in der ersten Ausführungsform herumgeführt. Die zweite Aufwickelrolle 17 zum Aufwickeln des Liners 16 ist bei der zweiten Ausführungsform des Applikators 10 nicht mehr notwendig. Die Funktion des Applikators 10 ist hinsichtlich des Aufbringens des Stanzteils 2 auf die Öffnung 12 genauso wie die des Applikators 10 der ersten Ausführungsform. Die Offenbarung zu den vorherigen Figuren gilt entsprechend auch für Fig. 5. Das Stanzteilband 1 wird durch angetriebenes Drehen der ersten Aufwickelrolle 13 an der Trägerschicht 3 gezogen, und das Stanzteilband 1 wird so über der Öffnung 12 positioniert, dass ein Stanzteil 2 exakt am Trägerkopf 8 positioniert ist. Der Applikator 10 wird dann in einer Bewegung des (nicht eingezeichneten) Roboterarmes an dem der Applikator 10 angeordnet ist, auf die Öffnung 12 gedrückt und durch die Klebkraft der Klebmasseschicht 4 des Stanzteils 2 entlang des Öffnungsrandes reißt das Stanzteil 2, beim Fortbewegen des Applikators 10 weg von der Oberfläche 11, aus dem Stanzteilband 1 heraus. Das sich bildende Lochband 20 wird auf der ersten Aufwickelrolle 13 aufgewickelt. Das Lochband 20 auf der ersten Aufwickelrolle hat dieselbe Gestalt wie das Lochband 20 auf der ersten Aufwickelrolle 13 der ersten Ausführungsform. Durch das Aufwickeln des Lochbandes 20 erhält das Stanzteilband 1 seinen getakteten Vorschub und das nächste Stanzteil 2 wird auf dem Stempelkopf 8 positioniert.

### Bezugszeichenliste

- 1: Stanzteilband
- 2: Stanzteil
- 3: Trägerschicht
- 4: Klebmasseschicht

- 6: Haltegurt
- 7: Stanzteilrolle
- 8: Stempelkopf
- 9: Stempel
- 10: Applikator
- 11: Oberfläche
- 12: Öffnung
- 13: erste Aufwickelrolle

- 16: Liner
- 17: zweite Aufwickelrolle
- 18: Sollbruchstelle
- 19: Stanzteilkomplement
- 20: Lochband

- d: Breite

- L: Längsrichtung

## Patentansprüche

1. Applikator für Stanzteile (2) mit
einem Stanzteilband (1) mit einer Längsrichtung (L) und mit einer Trägerschicht (3) und einer Klebmasseschicht (4), wobei eine Außenkontur der Stanzteile (2) durch die Träger- und Klebmasseschicht (3, 4) bis auf Sollbruchstellen (18) durchgestanzt ist und ein Stanzteilkomplement (19) die Stanzteile (2) durchgehend seitlich zu einer Längsrichtung (L) überragt, und
einem Stempelkopf (8), über den das Stanzteilband (1) läuft, wobei die über den Stempelkopf (8) laufenden Stanzteile (2) mit ihrer Klebmasseschicht (4) dem Stempelkopf (8) abgewandt sind und
die Stanzteile (2) mittels des Stempelkopfes (8) auf eine Oberfläche (11) drückbar sind.

2. Applikator nach Anspruch 1,
**dadurch gekennzeichnet, dass** eine Steuerung mit einem ersten Sensor, der mit einem Abtastbereich auf den Stempelkopf (8) gerichtet ist und das Vorhandensein eines der Stanzteile (2) am Stempelkopf (8) registriert, und einem Roboterarm an dem der der Applikator angeordnet ist signalleitend verbunden ist und die Steuerung eine erste Aufwickelrolle (13) des Stanzteilbandes (1) bei Registrierung eines der Stanzteile (2) am Stempelkopf (8) stoppt und dann eine Hin-Bewegung und eine Her-Bewegung des Roboterarms mit dem Applikator antreibt.

3. Applikator nach Anspruch 1 oder 2,
**dadurch gekennzeichnet, dass** die Steuerung den Roboterarm ansteuert und den Stempelkopf (8) in eine erste Position über der Oberfläche (11) bewegt und das Stanzteil (2) in einer ersten Oberflächenposition aufklebt und nach dem Aufkleben des Stanzteils (2) den Roboterarm ansteuert und den Stempelkopf (8) in eine zweite Position über der Oberfläche (11) bewegt und dort eine Hin-Bewegung und eine Her-Bewegung des Applikators antreibt.

4. Applikator nach einem der vorstehenden Ansprüche,
**gekennzeichnet durch** eine Stanzteilrolle (7) auf einer Zuführseite des Stempelkopfes (8) und die erste Aufwickelrolle (13) auf einer Abführseite des Stempelkopfes (8), die mit der Steuerung signalleitend verbunden ist und auf der ein Lochband (20) aufwickelbar ist und das Stanzteilband (1) getaktet vorbewegt.

5. Applikator nach einem der vorstehenden Ansprüche,
**gekennzeichnet durch** eine zweite Aufwickelrolle (17) an der Zuführseite zum Aufwickeln eines Liners (16).

6. Verfahren zum Aufbringen von Stanzteilen (2) auf eine Oberfläche (11), indem ein Stanzteilband (1) mit einer Längsrichtung (L) und mit einer Trägerschicht (3) und einer Klebmasseschicht (4) über einen Stempelkopf (8) eines Stempels (9) läuft, wobei eine Außenkontur der Stanzteile (2) durch die Träger- und Klebmasseschicht (3, 4) bis auf Sollbruchstellen (18) durchgestanzt ist und ein Stanzteilkomplement (19) die Stanzteile (2) durchgehend seitlich zur Längsrichtung (L) überragt, das Stanzteilband (1) gestoppt wird, wenn eines der Stanzteile (2) über dem Stempelkopf (8) positioniert ist und der Stempel (9) dann in einer Hin-und-her-Bewegung eines der Stanzteile (2) auf die Oberfläche (11) klebt.

7. Verfahren nach Anspruch 6,
**dadurch gekennzeichnet, dass** das Stanzteilband (1) vorbefördert wird und das aufgeklebte Stanzteil (2) aus dem Stanzteilband (1) an den Sollbruchstellen (18) abgerissen wird.

8. Verfahren nach Anspruch 6 oder 7 ,
**dadurch gekennzeichnet, dass** ein erster Sensor auf den Stempelkopf (8) gerichtet wird und das Vorhandensein des Stanzteils (2) erkennt und bei Erkennen des Stanzteils (2), das Stanzteilband (1) gestoppt wird und dann der Stempel (9) zur Oberfläche (11) bewegt wird und das Stanzteil (2) aufklebt und dann das Stanzteilband (1) um eines der Stanzteile (2) weitergetaktet wird.

9. Verfahren nach Anspruch 6, 7 oder 8,
**dadurch gekennzeichnet, dass** eine erste Position auf der Oberfläche (11) bestimmt wird und das Stanzteil (2) auf die erste Position geklebt wird und dass eine zweite Position bestimmt wird und der Stempel (9) während der Weitertaktung zur zweiten Position bewegt wird.

10. Stanzteilband mit einer Trägerschicht (3) und einer Klebmasseschicht (4), **dadurch gekennzeichnet, dass** eine Außenkontur von Stanzteilen (2) durch die Träger- und Klebmasseschicht (3, 4) bis auf Sollbruchstellen (18) durchgestanzt ist und ein Stanzteilkomplement (19) die Stanzteile (2) durchgehend seitlich zu einer Längsrichtung (L) überragt.

11. Stanzteilband nach Anspruch 10,
**dadurch gekennzeichnet, dass** ein Liner (16) entlang der Klebmasseschicht (4) angeordnet ist.

12. Stanzteilband nach Anspruch 10 oder 11,
**dadurch gekennzeichnet, dass** eine Klebkraft zwischen Klebmasseschicht (4) und einer Oberfläche (11) größer ist als eine Reißkraft, mit der das Stanzteil (2) aus dem Stanzlingsband (1) herausgerissen wird.
